# EUROPEAN PATENT SPECIFICATION

(11) **EP 0 801 486 B1**
(45) Date of publication and mention of the grant of the patent: **05.02.2003**
(21) Application number: 97103266.9
(22) Date of filing: 27.02.1997
(51) Int. Cl.: H04L 27/26

(54) **Carrier recovery in a multicarrier receiver**
Trägerrückgewinnung in einem Mehrträgerempfänger
Récupération de porteuse dans un récepteur de signaux multiporteurs

(30) Priority: 08.04.1996 JP 11060296
(43) Date of publication of application: 15.10.1997
(73) Proprietor: KABUSHIKI KAISHA KENWOOD, Shibuya-ku Tokyo (JP)
(72) Inventor: Okuhata, Yasuhide, Yokohama-shi, Kanagawa (JP)
(74) Representative: Patentanwälte Leinweber & Zimmermann

(56) References cited:
- WO-A-96/16493
- FR-A- 2 721 778
- US-A- 5 274 629
- YOSHIDA S ET AL: "NEW COHERENT DEMODULATION TECHNIQUE FOR LAND-MOBILE SATELLITE COMMUNICATIONS" PROCEEDINGS OF THE INTERNATIONAL MOBILE SATELLITE CONFERENCE, 1990, XP000914008 Ottawa

## Description

### BACKGROUND OF THE INVENTION

### 1. Field of the Invention

The present invention relates to a demodulator which can be used in a receiver for receiving digital/audio broadcasting signals, and more particularly to a demodulator for demodulating a signal modulated by orthogonal frequency division multiplex (OFDM).

### 2. Related Background Art

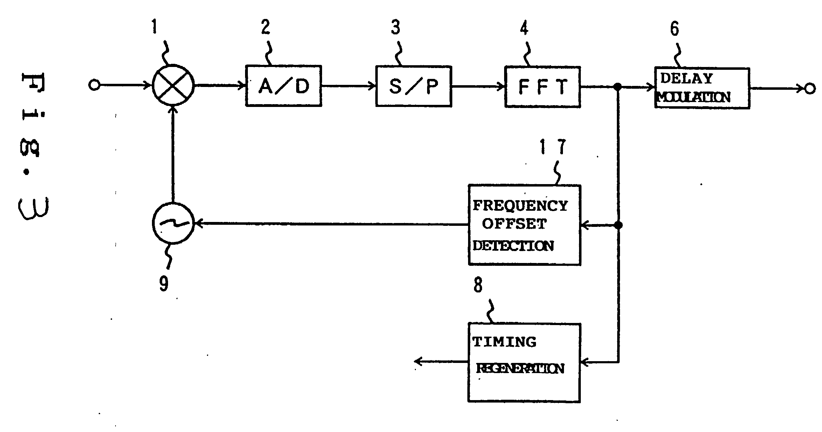

In a receiver using a conventional demodulator shown in Fig. 3, an OFDM modulated signal applied to an input terminal is frequency converted by a mixer 1 and A/D converted by an A/D converter 2. An A/D converted signal is converted by a serial/parallel converter 3 into parallel data which is supplied to a fast Fourier transformation circuit (hereinafter called an FFT circuit) 4. In the FFT circuit, an input signal in time domain is Fourier transformed into a signal in frequency domain. The signal in frequency domain output from the FFT circuit is supplied to a delay demodulation circuit 6, a frequency offset detector circuit 17, and a timing regeneration circuit 8. The delay detection circuit 6 delay-demodulates an input signal to obtain demodulated data which is output from an output terminal.

The frequency offset detector circuit 17 detects a frequency offset amount of the input signal, and in accordance with the detected frequency offset amount, controls an oscillation frequency of a voltage controlled oscillator 9 to correct a frequency shift. An output from the voltage controlled oscillator 9 with its frequency shift being corrected is supplied to the mixer 1 for frequency conversion. In the meantime, the timing regeneration circuit 8 detects a timing shift of a frame sync signal or the like from the input signal, and sends a timing signal corrected with the detected timing shift.

If a frequency shift is large, a time required for the conventional demodulator to correct the frequency shift becomes long.

Further, if it takes a long time to correct a large frequency shift, an error of timing regeneration becomes large and timing correction cannot be carried out normally.

Patent publication FR 2721778 discloses a demodulator for coded OFDM which estimates a phase error and uses it to adjust the phase of a local oscillator.

### SUMMARY OF THE INVENTION

It is an object of the present invention to provide a demodulator whose pull-in time is short even if a received signal has a large frequency shift.

According to a demodulator of this invention for A/D converting a received signal by an A/D converter and discrete Fourier transforming and demodulating the A/D converted signal, a frequency offset value in a demodulation input is detected from data subjected to discrete Fourier transformation, and the data subjected to discrete Fourier transformation is shifted in accordance with the detected frequency offset value to correct a frequency shift.

According to the demodulator of this invention, a frequency offset value in a demodulation input is detected from data subjected to discrete Fourier transformation, and the data subjected to discrete Fourier transformation is shifted in accordance with the detected frequency offset value to correct a frequency shift.

### BRIEF DESCRIPTION OF THE DRAWINGS

Fig. 1 is a block diagram showing the structure of main parts of a receiver using a demodulator according to an embodiment of the present invention.

Fig. 2 is a block diagram showing the structure of main parts of a receiver using a demodulator according a modification of the embodiment of the present invention.

Fig. 3 is a block diagram showing the structure of main parts of a receiver using a conventional demodulator.

### DETAILED DESCRIPTION OF THE PREFERRED EMBODIMENTS

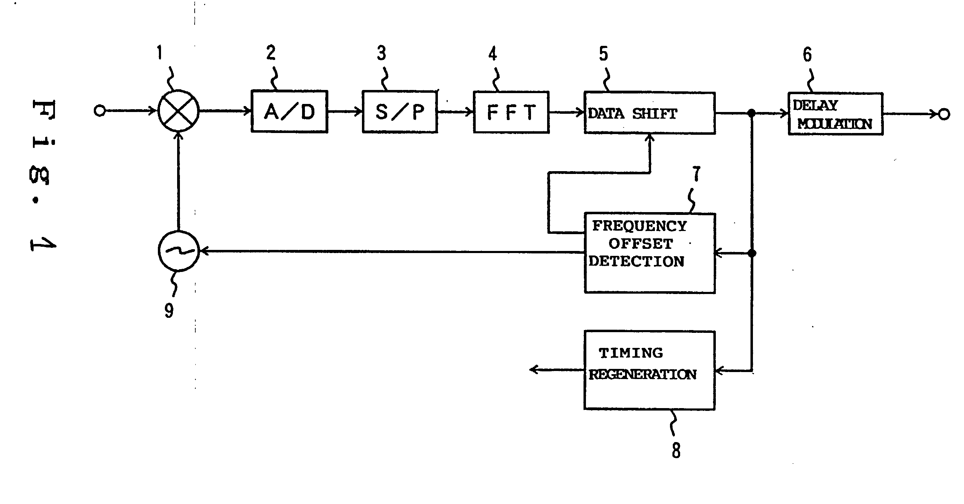

Embodiments of a demodulator of this invention will be described with reference to the accompanying drawings. Fig. 1 is a block diagram showing the structure of main parts of a receiver using a demodulator according to an embodiment of the present invention.

In a receiver using a demodulator of this embodiment, a received signal is frequency converted into an intermediate frequency signal by a mixer 1 in cooperation with a voltage controlled oscillator 9 functioning as a local oscillator. The intermediate frequency signal is converted into a digital signal by an A/D converter 3. The intermediate frequency digital signal is converted into parallel data by a serial/parallel converter 3 and supplied to an FFT circuit 4.

The parallel data in time domain is Fourier transformed by the FFT circuit 4 into a signal in frequency domain. An output from the FFT circuit 4 is shifted by a data shift circuit 5 in accordance with a frequency offset amount detected by a frequency offset detector circuit 7, and supplied to the frequency offset detector circuit 7, a timing regeneration circuit 8, and a delay demodulation circuit 6. The delay demodulation circuit 6 delay-demodulates the input signal to obtain demodulated data which is output from an output terminal.

The frequency offset detector circuit 7 detects a frequency offset amount from the input signal, and supplies it to the data shift circuit 5. The data shift circuit 5 shifts the input data in accordance with the supplied frequency shift amount. The detected frequency shift amount is also supplied to the voltage controlled oscillator 9 functioning as a local oscillator to control the oscillation frequency thereof and correct a frequency shift. A frequency shift corrected output from the voltage controlled oscillator 9 is supplied to the mixer 1 for frequency conversion.

In the meantime, upon reception of an output from the data shift circuit 5, the timing regeneration circuit 8 detects a timing shift of a frame sync signal or the like from the input signal, and outputs a timing signal corrected by the timing shift.

In the demodulator of this embodiment, by representing the number of data input to the FFT circuit 4, i.e., the number of bits of parallel data output from the serial/parallel converter 3, by N, the serial/parallel converter 3 stores N discrete data in time domain input from the A/D converter 2 and thereafter outputs it to the FFT circuit 4.

By representing the sampling frequency of the A/D converter 2 by fₛ, a frequency resolution f_{d} of discrete data in the frequency range output from the FFT circuit is given by f_{d} = fₛ/N. If N discrete data input to the data shift circuit 5 is moved by n data, the discrete data is equivalently shifted by a frequency of (f_{d} x n). In this embodiment, therefore, if the frequency offset amount detected by the frequency offset detector circuit 7 is f₁, the data shift circuit 5 shifts the input data by an integer of (f₁/f_{d}), and the oscillator frequency of the voltage controlled oscillator 9 is controlled by the data corresponding to the remaining value of (f₁/f_{d}).

Namely, the data shift circuit 5 executes coarse control, whereas the voltage controlled oscillator 9 executes fine control. It is therefore possible to shorten a pull-in time even if the frequency shift is large, and a time required for the timing regeneration circuit 8 to become stable can be shortened. Demodulation can therefore be executed normally.

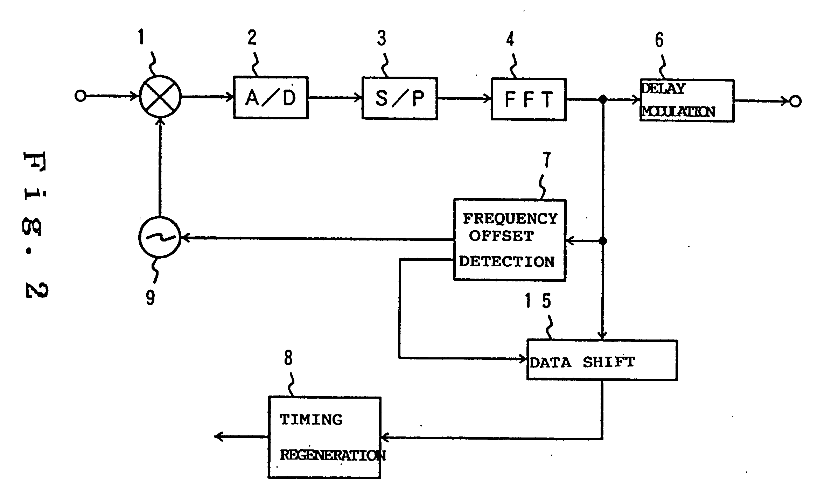

Fig. 2 is a block diagram showing the structure of main parts of a receiver using a demodulator according a modification of the embodiment of the present invention.

In the demodulator of this modification, in place of the data shift circuit 5 of Fig. 1, a data shift circuit 15 is connected at a different circuit portion. Data output from the FFT circuit 4 is supplied to the frequency offset detector circuit 7 to detect a frequency shift amount. If the frequency offset amount detected by the frequency offset detector circuit 7 is f₁, similar to the demodulator of the above-described embodiment, data corresponding to an integer of (f₁/f_{d}) is shifted by the data shift circuit 15 and supplied to the timing regeneration circuit 8 to regenerate a timing signal. The voltage controlled oscillator 9 is controlled in accordance with the data corresponding to the remaining value of (f₁/f_{d}).

In this modification, the data shift circuit 15 executes coarse control so that a time required for the timing regeneration circuit 8 to become stable can be shortened, and demodulation can be performed normally.

As described so far, in the demodulator of this invention, even if a large frequency offset is detected, a time required for recovering normal demodulation can be shortened. Further, a simple circuit structure is sufficient for realizing such effects.

## Claims

1. A demodulator (Fig. 1) comprising an A/D converter (2) for A/D converting a received signal, means (4) for discrete-Fourier transforming the A/D converted signal, means (6) for demodulating the Fourier transformed signal and means for detecting a frequency offset in the Fourier transformed signal
**CHARACTERIZED BY**
means (5) for shifting the Fourier transformed signal by an integer part of f₁/f_{d} where f₁ is the detected offset frequency and f_{d} is a frequency resolution in the discrete-Fourier transforming means to coarsely correct the frequency shift so that the frequency shifted signal is applied to the frequency offset detecting means.

2. A demodulator (Fig. 2) comprising an A/D converter (2) for A/D converting a received signal, means (4) for discrete-Fourier transforming the A/D converted signal, means (6) for demodulating the Fourier transformed signal, means (7) for detecting a frequency offset in the Fourier transformed signal and means (8) for regenerating a timing signal from the Fourier transformed signal
**CHARACTERIZED BY**
means (15) for shifting the Fourier transformed signal by an integer part of f₁/f_{d} where f₁ is the detected offset frequency and f_{d} is a frequency resolution in the discrete-Fourier transforming means to coarsely correct the frequency shift so that the frequency shifted signal is applied to the timing regenerating means.

3. A demodulator according to claims 1 or 2 including a mixer provided with a local oscillator for frequency-converting the received signal before the A/D converting wherein the oscillation frequency of the local oscillator is controlled by the remainder of f₁/f_{d} to finely correct the frequency shift.

## Patentansprüche

1. Demodulator (Fig. 1), welcher einen A/D-Wandler (2) zum A/D-Wandeln eines empfangenen Signals, eine Einrichtung (4) für eine diskrete Fouriertransformation des A/D-gewandelten Signals, eine Einrichtung (6) zum Demodulieren des fouriertransformierten Signals und eine Einrichtung (7) zum Erfassen eines Frequenzversatzes im fouriertransformierten Signal beinhaltet
**GEKENNZEICHNET DURCH**
eine Einrichtung (5) zum Verschieben des fouriertransformierten Signals um den ganzzahligen Anteil von f₁/f_{d}, wobei f₁ die erfasste Versatzfrequenz und f_{d} die Frequenzauflösung in der diskreten Fouriertransformationseinrichtung ist, um eine Grobkorrektur der Frequenzverschiebung durchzuführen, so dass das frequenzverschobene Signal der Frequenzverschiebungs-Erfassungseinrichtung zugeführt wird.

2. Demodulator (Fig. 2), welcher einen A/D-Wandler (2) zum A/D-Wandeln eines empfangenen Signals, eine Einrichtung (4) für eine diskrete Fouriertransformation des A/D-gewandelten Signals, eine Einrichtung (6) zum Demodulieren des fouriertransformierten Signals, eine Einrichtung (7) zum Erfassen eines Frequenzversatzes im fouriertransformierten Signal und eine Einrichtung (8) zum Rückgewinnen eines Taktgebersignals aus dem fouriertransformierten Signal beinhaltet
**GEKENNZEICHNET DURCH**
eine Einrichtung (15) zum Verschieben des fouriertransformierten Signals um den ganzzahligen Anteil von f₁/f_{d}, wobei f₁ die erfasste Versatzfrequenz und f_{d} die Frequenzauflösung in der diskreten Fouriertransformationseinrichtung ist, um eine Grobkorrektur der Frequenzverschiebung durchzuführen, so dass das frequenzverschobene Signal der Taktgebersignal-Rückgewinnungseinrichtung zugeführt wird.

3. Demodulator nach einem der Ansprüche 1 oder 2, welcher einen Mischer beinhaltet, der mit einem Lokaloszillator zum Frequenzwandeln des empfangenen Signals vor dem A/D-Wandeln versehen ist, wobei die Oszillationsfrequenz des Lokaloszillators durch den Rest von f₁/f_{d} gesteuert wird, um eine Feinkorrektur der Frequenzverschiebung durchzuführen.

## Revendications

1. Démodulateur (Figure 1) comprenant un convertisseur A/N (2) pour convertir A/N un signal reçu, un moyen (4) pour une transformation de Fourier discrète du signal converti A/N, un moyen (6) pour démoduler le signal soumis à une transformation de Fourier et un moyen pour détecter un décalage de fréquence dans le signal ayant subi la transformation de Fourier
**caractérisé par**
un moyen (5) pour déplacer le signal ayant subi la transformation de Fourier par une partie entière de f₁/f_{d} où f₁ est la fréquence de décalage détectée et f_{d} est une résolution de fréquence dans le moyen de transformation discret de Fourier pour corriger grossièrement le déplacement de fréquence de telle sorte que le signal déplacé en fréquence est appliqué au moyen de détection de décalage de fréquence.

2. Démodulateur (Figure 2) comprenant un convertisseur A/N (2) pour convertir A/N un signal reçu, un moyen (4) pour une transformation discrète de Fourier du signal converti A/N, un moyen (6) pour démoduler le signal ayant subi la transformation de Fourier, un moyen (7) pour détecter un décalage de fréquence dans le signal ayant subi la transformation de Fourier et un moyen (8) pour régénérer un signal de cadencement pour le signal ayant subi la transformation de Fourier
**caractérisé par**
un moyen (15) pour déplacer le signal ayant subi la transformation de Fourier par une partie entière de f₁/f_{d} où f₁ est la fréquence de décalage détectée et f_{d} est une résolution de fréquence dans le moyen de transformation discret de Fourier pour corriger grossièrement le déplacement de fréquence de telle sorte que le signal déplacé en fréquence est appliqué au moyen de régénération de cadencement.

3. Démodulateur selon les revendications 1 ou 2, incluant un mélangeur présentant un oscillateur local pour une conversion de fréquence du signal reçu avant la conversion A/N où la fréquence d'oscillation de l'oscillateur local est commandée par le restant de f₁/f_{d} pour corriger finement le déplacement de fréquence.
